# EUROPEAN PATENT APPLICATION

(11) **EP 4 600 022 A1**
(43) Date of publication of application: **13.08.2025**
(21) Application number: 24875787.4
(22) Date of filing: 27.06.2024
(51) Int. Cl.: B29C 65/00, B29C 65/30, B29C 65/18, H04N 7/18, G01B 11/16, H01M 10/04

(54) **METHOD FOR SEALING SECONDARY BATTERY**

(30) Priority: 16.10.2023 KR 20230137564
(71) Applicant: LG Energy Solution, Ltd., Seoul 07335 (KR)
(72) Inventor: RA, Youngmin, Daejeon 34122 (KR); YOON, Seog Jin, Daejeon 34122 (KR); LEE, Seungkyu, Daejeon 34122 (KR); LEE, Gitaek, Daejeon 34122 (KR)
(74) Representative: Goddar, Heinz J.
(86) International application number: PCT/KR2024/009035
(87) International publication number: WO 2025/084541

(57) **Abstract**

The present disclosure provides a method for sealing a secondary battery, which seals an electrode lead and a battery case of the secondary battery, the method comprising the steps of: providing a heater on a front surface of a sealer; providing the electrode lead between an upper sealer and a lower sealer contained in the sealer; heating the electrode lead with the heater; sealing the electrode lead and the battery case with the sealer; photographing the sealer around the heater with a camera disposed on a front surface of the heater to obtain shape information; measuring the temperature of the sealer around the heater with a temperature sensor to obtain temperature information; acquiring thermal expansion data according to the temperature of the sealer using the shape information, the temperature information, and the material information about the sealer; and measuring the temperature of the electrode lead with the temperature sensor and then predicting the thermal expansion value of the sealer at the electrode lead covered by the heater using the thermal expansion data.

## Description

### [TECHNICAL FIELD]

### Cross Citation with Related Application(s)

This application claims priority from and the benefit of Korean Patent Application No. 10-2023-0137564 filed on October 16, 2023 in the Korean Intellectual Property Office, the disclosure of which is incorporated herein by reference in its entirety.

The present disclosure relates to a method for sealing a secondary battery, and more particularly, to a method for sealing a secondary battery that can predict the amount of thermal deformation of a gap of a sealer in a non-visible region during the sealing process, thereby adjusting the gap of the sealer.

### [BACKGROUND]

The critical-to-quality(CTQ) parameter of secondary batteries includes the sealing thickness of the electrode lead, and the critical to process(CTP) parameter related to the sealing thickness includes the gap adjustment of the sealer. That is, in order for the electrode lead of the secondary battery to be sealed to an appropriate thickness, it is important to adjust the gap between the upper sealer and the lower sealer contained in the sealer.

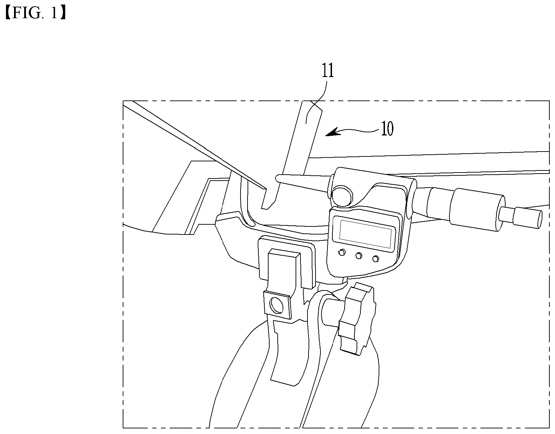

Conventionally, as illustrated in FIG. 1, the secondary battery 10 that has been sealed is sampled at regular intervals, and inspected frequently to measure the thickness at multiple points on the pouch sealing portion around the electrode lead 11 and adjust the gap of a sealer. However, in the case of this method, a process of checking the quality of products through total inspection when a defect occurs is required, and material, human, and time losses occur in the process of checking the quality of products, whereby as the need for a method of measuring and managing the gap of a sealer on an in-line basis during the sealing process without separating the sample from the process is increasing, research on it has been conducted.

Even in a conventional case, attempts were made to introduce smart cameras into the process for in-lining, but there was a problem that it was difficult to photograph with the camera from the front because the position of the sealer, which was the measurement reference, was covered by the heater. At the back surface where the heater was not disposed, it was difficult to photograph with the camera due to the problem of pallet transport.

Therefore, there is a need to develop a method that can measure and manage the gap of a sealer when the position of the sealer, which is the measurement reference, is in a non-visible region.

### [DETAILED DESCRIPTION OF THE INVENTION]

### [Technical Problem]

It is an object of the present disclosure to provide a sealing method that predicts the amount of thermal deformation of a sealer in a non-visible region on an in-line basis, and adjusts the gap of the sealer.

It is an object of the present disclosure to provide a sealing method that adjusts the gap of the sealer on an in-line basis, thereby having an improved reliability.

### [Technical Solution]

According to the present disclosure, there is provided a method for sealing a secondary battery, which seals an electrode lead and a battery case of the secondary battery, the method comprising the steps of: providing a heater on a front surface of a sealer; providing the electrode lead between an upper sealer and a lower sealer contained in the sealer; heating the electrode lead with the heater; sealing the electrode lead and the battery case with the sealer; photographing the sealer around the heater with a camera disposed in front of the heater to obtain shape information; measuring the temperature of the sealer around the heater with a temperature sensor to obtain temperature information; acquiring thermal expansion data according to the temperature of the sealer using the shape information, the temperature information, and the material information about the sealer; and measuring the temperature of the electrode lead with the temperature sensor and then predicting the thermal expansion value of the sealer at the electrode lead covered by the heater using the thermal expansion data.

In one embodiment, the method may further comprise a step of adjusting a gap between the upper sealer and the lower sealer in accordance with the predicted thermal expansion value.

In one embodiment, the camera, the heater, and the sealer are arranged in a first direction, and the sealer may extend in a second direction perpendicular to the first direction.

In one embodiment, in the predicting the thermal expansion value, the temperature sensor measures the temperature of the central position of the electrode lead, and the central position may be a central position of the electrode lead in the second direction.

In one embodiment, the camera may be disposed in front of the sealer.

In one embodiment, the shape information may be obtained by measuring the height of the sealer along the longitudinal direction of the sealer.

In one embodiment, the temperature sensor may include any one of a resistance temperature detector(RTD) sensor, a thermocouple temperature sensor, and an infrared temperature sensor.

In one embodiment, the step of heating the electrode lead and the step of sealing the electrode lead may be simultaneously performed.

In one embodiment, the sealer may include at least one of BeCu, WC, AlBe, Inconel718, and Ni-Be.

In one embodiment, the secondary battery includes an electrode assembly housed in the battery case, and the electrode leads may protrude from the electrode assembly at both ends of the battery case.

### [Advantageous Effects]

According to the present disclosure, it is possible to reliably predict the amount of thermal deformation of a sealer at a measurement position in a non-visible region.

When the sealing method of the present disclosure is applied, the gap of the sealer can be measured and managed on an in-line basis in the sealing process, thereby providing a sealing method having improved reliability and process efficiency.

### [BRIEF DESCRIPTION OF THE DRAWINGS]

FIG. 1 is a diagram illustrating a conventional method for evaluating a sealing thickness.
FIG. 2 is a perspective view illustrating the front surface of a sealer of one embodiment.
FIG. 3 is a plan view illustrating the front surface of a sealer of one embodiment.
FIG. 4 is a diagram illustrating one step in a sealing method of one embodiment.
FIG. 5 is a perspective view illustrating a secondary battery of one embodiment.
FIG. 6 is a graph illustrating the results of a thermal expansion simulation of one embodiment.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

The terms representing directions such as the front side, the rear side, the left side, the right side, the upper side, and the lower side have been used, but the terms used are provided simply for convenience of description and may become different according to the position of an object, the position of an observer, or the like.

Hereinafter, preferable embodiments are presented for better understanding the present disclosure. However, the following embodiments are only for illustrating the present disclosure, and the present disclosure is not limited to or by them.

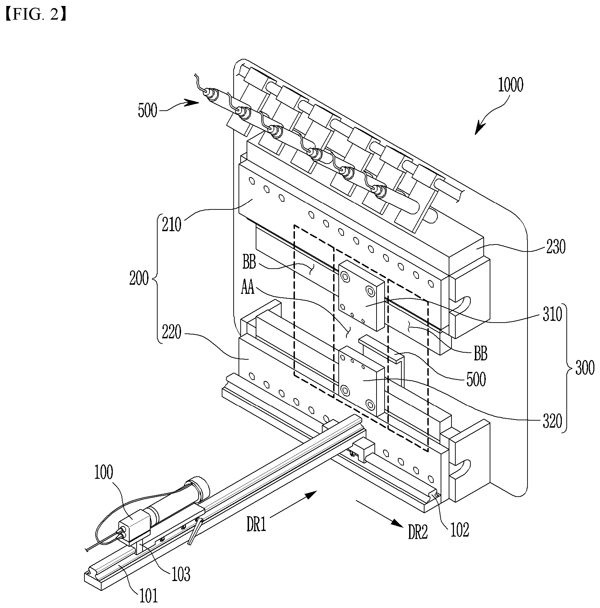

FIG. 2 is a perspective view illustrating the front surface of a sealer of one embodiment.

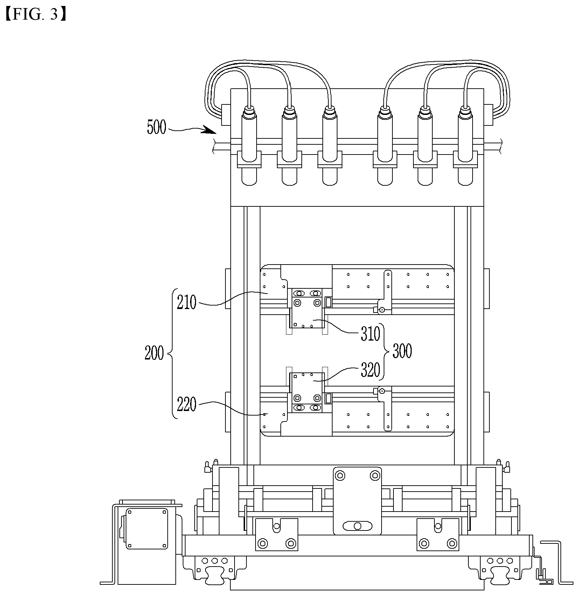

FIG. 3 is a plan view illustrating the front surface of a sealer of one embodiment.

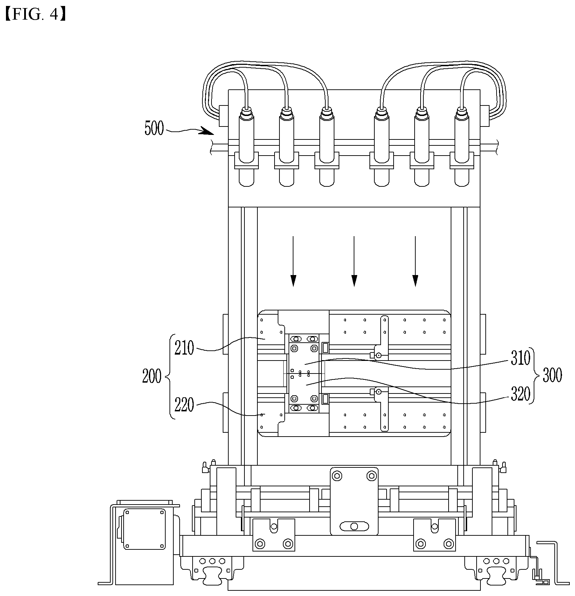

FIG. 4 is a diagram illustrating one step in a sealing method of one embodiment.

Referring to FIGS. 2, 3 and 4 together, a sealing apparatus 1000 of one embodiment comprises a camera 100, a sealer 200, a heater 300, a lead device 400, and a temperature sensor 500. Also, the sealing apparatus 1000 further comprises a first rail 101, a second rail 102, and a basket 103 for moving the camera 100.

The camera 100 used may be a known camera including a vision sensor. The camera 100 may directly measure the measurement value of the object to be photographed. Specifically, the camera 100 may express the interval on the Field Of Vision (FOV) by converting it into an actual measurement value. In addition, the camera 100 measures the object to be photographed at multiple points, wherein distance conversion software for the camera 100, lens, lighting, and the number of pixels can be used.

The camera 100 can stably photograph the sealer 200, which is the object to be photographed, from the front. As an example, the camera 100 can be stably fixed by being housed in the basket 103, or can adjust the position while stably moving on the rail.

In the present disclosure, it is illustrated that the camera 100 can be housed in the basket 103 and move on the first rail 101 or the second rail 102. The first rail 101 extends in the first direction DR1, and the second rail 102 extends in the second direction DR2 perpendicular to the first direction DR1. The second direction DR2 is defined as a direction parallel to the extension direction of the sealer 200.

The camera 100 can move along the first rail 101 and move along the transport direction of the secondary battery within the sealer 200. In addition, the camera 100 can adjust the distance from the sealer 200, which is a heat source, and adjust the focus on the field of vision (FOV) while moving along the second rail 102.

The first rail 101 and the second rail 102 may be, for example, LM(Linear motion) rails in the form of long bars. However, the types of the first rail 101 and the second rail 102 are not limited thereto.

The sealer 200 includes an upper sealer 210 and a lower sealer 220 facing each other, and is mounted on a heating block 230. The upper sealer 210 and the lower sealer 220 are symmetrical to each other, and the distance between the upper sealer 210 and the lower sealer 220 is defined as a gap of the sealer. The sealer 200 may extend along the second direction DR2.

Meanwhile, a lead device 400 may be arranged between the upper sealer 210 and the lower sealer 220. When a secondary battery is mounted on the sealer 200, an electrode lead of the secondary battery may be provided on the lead device 400. The electrode lead of the secondary battery is disposed on the lead device 400 and heated and sealed. Specifically, the electrode lead of the secondary battery is heated by the heater 300 so that it can be heated to a uniform temperature. For example, the heater 300 may heat the electrode lead to the same temperature as the sealer 200, thereby minimizing heat loss due to the temperature difference between the sealer 200 and the electrode lead during the sealing process. In addition, the heater 300 is located on the front surface of the sealer 200 to minimize heat loss from the electrode lead. In this specification, the front surface of the sealer 200 is defined as a surface of the sealer 200 as viewed from the camera 100.

The heater 300 may include an upper heater 310 and a lower heater 320 facing each other. The upper heater 310 is disposed in front of the upper sealer 210, and the lower heater 320 is disposed on the front surface of the lower sealer 220. When the sealing apparatus 1000 operates, the upper heater 310 and the lower heater 320 move up and down together with the sealer 200. In this case, the upper heater 310 and the lower heater 320 move up and down so as to have a minus tolerance, so that the heater 300 covers the lead device 400 and the sealer 200 in a region AA. The region AA is a region where the lead device 400 is disposed, which is a region for measuring the gap of the sealer 200 that determines the sealing thickness.

That is, in the camera 100, the lead device 400 and the sealer 200 in the region AA are placed in a non-visible region by the heater 300, and direct photographing and measurement are impossible.

Therefore, the present disclosure provides a method for sealing a secondary battery that can reliably predict the gap of the sealer 200 placed in the region AA and improve in process efficiency.

A method for sealing a secondary battery according to the present disclosure is a method for sealing an electrode lead and a battery case of the secondary battery, the method comprising the steps of: providing a heater on a front surface of a sealer; providing the electrode lead between an upper sealer and a lower sealer of the sealer; heating the electrode lead with the heater; sealing the electrode lead and the battery case with the sealer; photographing the sealer around the heater with a camera disposed in front of the heater to obtain shape information; measuring the temperature of the sealer around the heater with a temperature sensor to obtain temperature information; acquiring thermal expansion data according to the temperature of the sealer using the shape information, the temperature information, and the material information about the sealer; and measuring the temperature of the electrode lead with the temperature sensor and then predicting the thermal expansion value of the sealer at the electrode lead covered by the heater using the thermal expansion data.

Next, each step of the method for sealing the secondary battery of the present disclosure will be specifically described. The same contents as above are applied to the same configuration as the configuration as described above, and a detailed description thereof will be omitted.

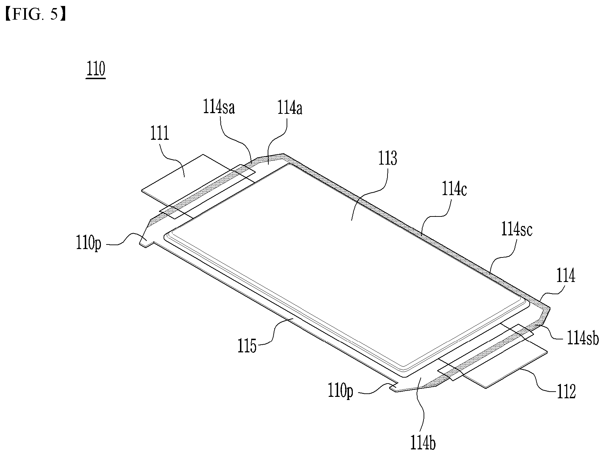

In the method for sealing the electrode lead and battery case of a secondary battery, the secondary battery will be described with reference to FIG. 5.

FIG. 5 is a perspective view illustrating a secondary battery of one embodiment.

In FIG. 5, it is illustrated that the secondary battery of the present disclosure is a pouchtype battery cell as an example, but the type of the secondary battery of the present disclosure is not limited thereto.

Referring to FIG. 5, the secondary battery 110 has a structure in which two electrode leads 111 and 112 respectively protrude from one end 114a and the other end 114b of the cell body 113 toward mutually opposite directions. The secondary battery 110 can be produced by joining both ends 114a and 114b of a cell case 114 and one side surfaces 114c connecting them in a state in which an electrode assembly (not shown) is housed in a cell case 114. In other words, the secondary battery 110 according to the present embodiment has a total of three sealing parts 114sa, 114sb and 114sc, wherein the sealing parts 114sa, 114sb and 114sc have a structure that is sealed by a method such as thermal fusion, and the remaining other side part may be composed of a connecting part 115.

The connecting part 115 is a region that extends along one edge of the second battery 110, and a protrusion part 110p of the secondary battery 110 may be formed at an end of the connecting part 115. The protruding part 110p may be formed on at least one of both ends of the connecting part 115, and may protrude in a direction perpendicular to the direction in which the connecting part 115 extends. The protrusion part 110p may be located between the connecting part 115 and one of the sealing parts 114sa and 114sb of both ends 114a and 114b of the cell case 114.

The cell case 114 is generally formed in a laminated structure of resin layer/metal thin film layer/resin layer.

The method for sealing a secondary battery of the present disclosure is for forming the sealing parts 114sa and 114sb at both ends of the secondary battery 110 described above. Specifically, the method for sealing a secondary battery of the present disclosure can be applied to seal both ends 114a and 114b of the battery case 114 and the electrode leads 111 and 112 to form the sealing part 114sa and 114sb. However, the application examples of the present disclosure are not limited thereto.

As an example, the secondary battery described below is understood as the secondary battery 110 described above with reference to FIG. 5.

In the method of sealing an electrode lead and a battery case of the secondary battery,
the step of providing a heater on a front surface of a sealer is a step of providing a heater 300 on the front surface of the sealer 200 to reduce heat loss in the electrode lead. The upper heater 310 of the heater 300 is disposed on the front surface of the upper sealer 210, and the lower heater 320 of the heater 300 is disposed on the front surface of the lower sealer 220.

The step of providing the electrode lead between an upper sealer and a lower sealer contained in the sealer is a step of providing an electrode lead of a secondary battery on a lead device 400 disposed between an upper sealer 210 and a lower sealer 220.

The secondary battery is provided on the rear surface of the sealer 200, and the electrode lead of the secondary battery can be disposed on the lead device 400. Meanwhile, the provided secondary battery is transported along the second direction DR2 of the sealer 200.

The step of heating the electrode lead with the heater is a step of heating the electrode lead disposed on the lead device 400 with the heater 300. The heater 300 heats the electrode lead to a uniform temperature to ensure uniform sealing. In addition, the heater 300 heats the electrode lead to the same temperature as the sealer 200, so that heat loss due to the temperature difference between the electrode lead and the sealer 200 can be prevented.

The step of sealing the electrode lead and the battery case with the sealer includes a step of sealing the electrode leads 111 and 112 and both ends 114a and 114b of the battery case 114 described above in FIG. 5 to form a sealing parts 114sa and 114sb. Referring to FIGS. 3 and 4 together, in the sealing step, the distance between the upper sealer 210 and the lower sealer 220 narrows, and the upper heater 310 and the lower heater 320 come into contact, so that the lead device 400 is covered when being observed from the front. At this time, the sealer 200 in a region AA where the lead device 400 is disposed is also covered by the heater 300. Meanwhile, the sealing step is performed simultaneously with the heating step described above.

The step of photographing the sealer around the heater with a camera disposed in front of the heater to obtain shape information includes a step of photographing the sealer 200 in the region BB with a camera 100 to obtain shape information thereof. Since the camera 100 cannot directly photograph and measure the lead device 400 and the sealer 200 in the region AA, it photographs the sealer 200 in the region BB adjacent to the region AA to obtain shape information thereon. At this time, the region BB may be a region adjacent to the region AA in the second direction DR2. For example, the region BB may be a region adjacent to both sides of the region AA in the second direction DR2. In one embodiment, the shape information is values obtained by measuring the height of the sealer 200 of the region BB along the length direction. The shape of the sealer 200 may change depending on the temperature, and specifically, as the sealer 200 is thermally deformed, its shape may change depending on the temperature. The camera 100 can photograph the shape of the sealer 200 at a specified temperature to provide shape information. The shape information obtained as above is used together with the temperature information described below and the material information about the sealer 200 to perform thermal expansion simulation and predict the shape of the region AA at a specific temperature. The specific details related thereto are described below.

The step of measuring the temperature of the sealer around the heater with a temperature sensor to obtain temperature information is a step of measuring the temperature of the sealing region of the sealer 200 with a temperature sensor 500. There is a temperature difference between the non-sealing region and the sealing region within the sealer 200. For example, the temperature of the non-sealing region in the sealer 200 may be 180°C to 190°C or less, and the temperature of the sealing region may be 200°C to 250°C or less. In the above step, the temperature of the sealer 200 in the region BB within the sealing region may be measured to obtain temperature information. Specifically, the temperature is measured at two or more points in the sealer 200 in the region BB, and the average value is used as the temperature information. The temperature sensor 500 may be disposed on the upper part of the sealer 200, as shown in FIGS. 2 to 4. However, the embodiment is not limited thereto, and for example, the temperature sensor 500 may be disposed separately from the sealer 200. The temperature sensor 500 may be a contact type temperature sensor or a non-contact type temperature sensor. For example, the temperature sensor 500 may include any one of a resistance temperature detector(RTD) sensor, a thermocouple temperature sensor, and an infrared temperature sensor. However, examples of the temperature sensor 500 are not limited thereto.

The step of acquiring thermal expansion data according to the temperature of the sealer using the shape information, the temperature information, and the material information about the sealer includes a step of performing thermal expansion simulation using the above-mentioned shape information, temperature information, and material information of the sealer 200. The temperature information of the sealer 200 described above is the temperature measured according to the material of the sealer 200. For example, the sealer 200 may include at least one of BeCu, WC, AlBe, Inconel718, and Ni-Be. Specifically, the sealer 200 may include any one of BeCu, WC, AlBe, Inconel718, and Ni-Be. For example, the sealer 200 may include BeCu. However, the material of the sealer 200 is not limited thereto.

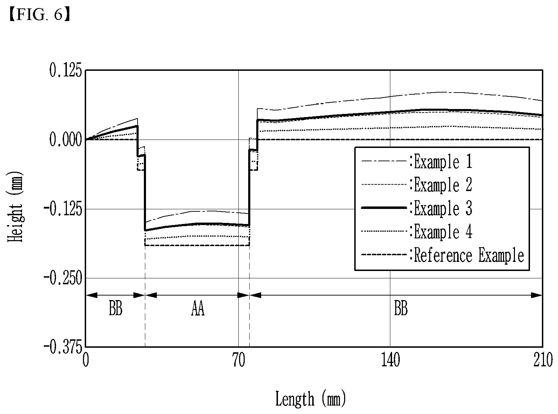

Similarly to the above method, a thermal expansion simulation was performed for the sealer of one embodiment by integrating the shape information, the material information, and the temperature information according to the material. The result is illustrated in FIG. 6.

FIG. 6 is a graph illustrating the results of a thermal expansion simulation of one embodiment.

In FIG. 6, the results of thermal expansion simulations for the sealers of Examples 1 to 4 and Reference Example are illustrated. The sealers of Examples 1 to 4 are sealers having the same shape but made of different materials.

Example 1 is a sealer containing BeCu, Example 2 is a sealer containing AlBe, Example 3 is a sealer containing Inconel718, Example 4 is a sealer containing an ultralight alloy (WC, tungsten carbide), and Reference Example is a sealer containing BeCu. Meanwhile, the material corresponds to the material information of the sealer described above.

In addition, the temperature of the sealer of Reference Example is 23°C. The sealers of

Examples 1 to 4 were heated at an initial temperature of 23°C and simulated at the following temperatures. Example 1 was 210.6°C, Example 2 was 210.6°C, Example 3 was 210.2°C, and Example 4 was 210.2°C. In this case, the average natural convective heat transfer coefficient was calculated as 20W/m²·°C.

That is, the sealers of Examples 1 to 4 were simulated at substantially the same temperature. Meanwhile, the temperature corresponds to the above-mentioned temperature information, and specifically, the temperature is a value obtained by measuring the temperature at two or more points in the sealing region of each sealer and averaging them.

The sealers of Examples 1 to 4 and Reference Example acquired shape information at the above temperatures, and the shape information was displayed on the graph of FIG. 6.

In the graph of FIG. 6, the x-axis represents the length information of the sealer. Specifically, the x-axis was measured up to 210 mm in the second direction (DR2, see FIG. 2) based on 0 mm as the point where the sealing area begins.

In the graph of FIG. 6, the y-axis represents the height information of the lower sealer 220. Specifically, the y-axis was based on 0 mm as the height of the end of the lower sealer 220 in the direction perpendicular to the first direction DR1 (see FIG. 2) and the second direction DR2 (see FIG. 2).

When performing simulation using the above-mentioned shape information, temperature information, and material information of the sealer, the expected thermal expansion data of the sealer 200 in the region AA, which is a non-visible region as shown in FIG. 6, can be obtained. Based on this, for the sealers having the materials of Examples 1 to 4, the thermal expansion value of the sealer 200 in the region AA can be predicted even at temperatures different from each temperature information.

In the above manner, a step of acquiring thermal expansion data according to the temperature of the sealer using the shape information, the temperature information, and the material information about the sealer can be performed.

The step of measuring the temperature of the electrode lead with the temperature sensor and then predicting the thermal expansion value of the sealer at the electrode lead covered by the heater using the thermal expansion data includes a step of predicting the thermal expansion value of the sealer 200 at the electrode lead by utilizing the thermal expansion data of the region AA obtained in FIG. 6. In order to manage the gap of the sealer 200, it is necessary to measure the thermal expansion value of the sealer 200 at the electrode lead covered by the heater 300 and reflect it in the process. That is, a step of predicting the thermal expansion value at the electrode lead temperature is performed for the sealer 200 in the region AA.

This step includes a step of measuring the temperature of the electrode lead with a temperature sensor 500 and predicting the thermal expansion value of the region AA at the measured electrode lead temperature from the thermal expansion value according to the temperature of the region AA obtained in FIG. 6. At this time, the temperature sensor 500 measures the temperature of the central position of the electrode lead, and the central position means a central position of the electrode lead in the second direction DR2.

The method for sealing a secondary battery of the present disclosure can predict the thermal expansion value of the sealer 200 in the non-visible region by performing the above-mentioned steps.

Subsequently, a step of reflecting the predicted thermal expansion value in the process and adjusting the gap of the sealer 200, i.e., the gap between the upper sealer 210 and the lower sealer 220 can be further performed.

The present disclosure can reliably predict the gap of the sealer in the non-visible region on an in-line basis during the sealing process by using the above method, and manage the sealing thickness, which is the critical to quality parameter. Accordingly, the method for sealing a secondary battery having high reliability and efficiency can be provided.

Although the invention has been shown and described in detail with reference to preferred embodiments thereof, it will be appreciated by those skilled in the art that the scope of the present disclosure is not limited thereto, and various modifications and improvements can be made in these embodiments without departing from the principles and sprit of the invention, the scope of which is defined in the appended claims and their equivalents.

## Claims

1. A method for sealing a secondary battery, which seals an electrode lead and a battery case of a secondary battery, the method comprising the steps of:
providing a heater on a front surface of a sealer;
providing the electrode lead between an upper sealer and a lower sealer of the sealer;
heating the electrode lead with the heater;
sealing the electrode lead and the battery case with the sealer;
photographing the sealer around the heater with a camera disposed in front of the heater to obtain shape information;
measuring the temperature of the sealer around the heater with a temperature sensor to obtain temperature information;
acquiring thermal expansion data according to the temperature of the sealer using the shape information, the temperature information, and the material information about the sealer; and
measuring the temperature of the electrode lead with the temperature sensor and then predicting the thermal expansion value of the sealer at the electrode lead covered by the heater using the thermal expansion data.

2. The method for sealing a secondary battery according to claim 1,
further comprising a step of adjusting a gap between the upper sealer and the lower sealer in accordance with the predicted thermal expansion value.

3. The method for sealing a secondary battery according to claim 1, wherein:
the camera, the heater, and the sealer are arranged in a first direction, and
the sealer extends in a second direction perpendicular to the first direction.

4. The method for sealing a secondary battery according to claim 3, wherein:
in the predicting the thermal expansion value, the temperature sensor measures the temperature of the central position of the electrode lead, and
the central position is a central position of the electrode lead in the second direction.

5. The method for sealing a secondary battery according to claim 3, wherein:
the camera is disposed in front of the sealer.

6. The method for sealing a secondary battery according to claim 1, wherein:
the shape information is obtained by measuring the height of the sealer along the longitudinal direction of the sealer.

7. The method for sealing a secondary battery according to claim 1, wherein:
the temperature sensor comprises any one of a resistance temperature detector(RTD) sensor, a thermocouple temperature sensor, and an infrared temperature sensor.

8. The method for sealing a secondary battery according to claim 1, wherein:
the step of heating the electrode lead and the step of sealing the electrode lead are simultaneously performed.

9. The method for sealing a secondary battery according to claim 1, wherein:
the sealer comprises at least one of BeCu, WC, AlBe, Inconel718, and Ni-Be.

10. The method for sealing a secondary battery according to claim 1, wherein:
the secondary battery comprises an electrode assembly housed in the battery case, and
the electrode leads protrude from the electrode assembly at both ends of the battery case.
